# EUROPEAN PATENT APPLICATION

(11) **EP 4 300 164 A1**
(43) Date of publication of application: **03.01.2024**
(21) Application number: 22784003.0
(22) Date of filing: 02.04.2022
(51) Int. Cl.: G02B 27/01, G02C 7/08

(54) **CONTROL METHOD FOR WEARABLE DEVICE, AND ELECTRONIC DEVICE**

(30) Priority: 08.04.2021 CN 202110379909
(71) Applicant: Huawei Technologies Co., Ltd., Shenzhen, Guangdong 518129 (CN)
(72) Inventor: HE, Zixuan, Shenzhen, Guangdong 518129 (CN); ZENG, Yiliang, Shenzhen, Guangdong 518129 (CN)
(74) Representative: Pfenning, Meinig & Partner mbB
(86) International application number: PCT/CN2022/085118
(87) International publication number: WO 2022/213937

(57) **Abstract**

A control method for a wearable device and an electronic device (100) are disclosed. The method includes: When the wearable device is not worn, a diopter of an optical lens group of the wearable device is increased, to increase a size of a light spot that is formed by focusing light on a screen (605) through an optical lens. This disperses energy of the light, and prevents the screen (605) from being sunburned.

## Description

This application claims priority to Chinese Patent Application No. 202110379909.2, filed with the China National Intellectual Property Administration on April 8, 2021 and entitled "CONTROL METHOD FOR WEARABLE DEVICE AND ELECTRONIC DEVICE", which is incorporated herein by reference in its entirety.

### TECHNICAL FIELD

Embodiments of this application relate to the field of wearable devices, and in particular, to a control method for a wearable device and an electronic device.

### BACKGROUND

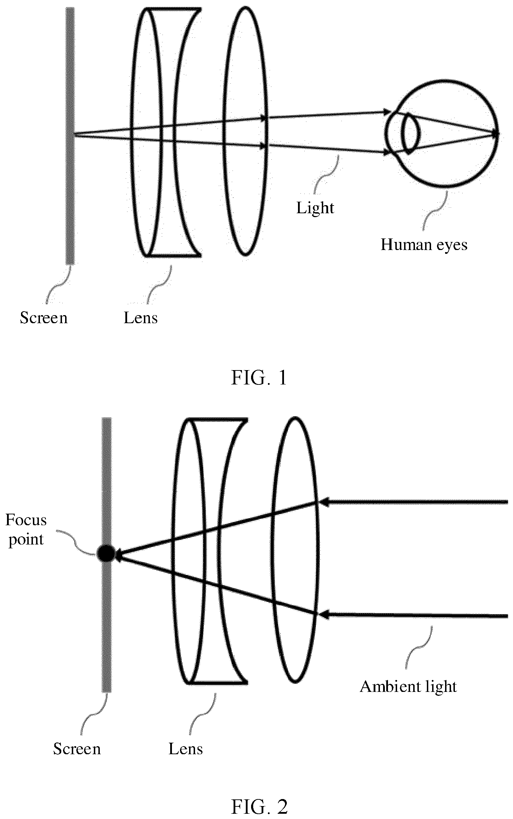

An optical imaging module in a virtual reality (Virtual Reality, VR) helmet device usually includes a display and an optical lens group. As shown in FIG. 1, when the device is used normally, light emitted by the display (namely, the screen) enters human eyes after being refracted by the optical lens group, so that a user can see a picture displayed on the screen in the VR helmet.

After the virtual reality helmet device is stopped to be used, an optical lens in the device is exposed to an environment. As shown in FIG. 2, because the optical lens group in this type of device has a function of light converging, a part of ambient light enters the optical imaging module through a side, near the human eyes, of the optical lens group, and is focused on the display after passing through the lens group, and this concentrates a large amount of energy at a light focus point on the screen. As a result, the screen is impaired, affecting a display effect of the virtual reality helmet device, or the screen is even damaged, causing a failure in displaying a picture.

At present, to resolve a problem that the screen is damaged due to focusing of the ambient light, a manner used in the conventional technology is to add a polarization device. The polarization device is added according to a polarization principle, and a polarization direction of the polarization device is consistent with a polarization direction of the light on the screen of the virtual reality helmet device. By using a characteristic that only light with a single polarization direction can pass through the polarization device, ambient light entering the virtual reality helmet device can be reduced, and polarized light emitted by the screen can pass through the polarization device. This reduces intensity of the ambient light focused on the screen without affecting the display effect, and further prevents the virtual reality helmet from being sunburned.

However, a light transmittance of a polarizer in a same polarization direction does not exceed 90%. Consequently, display brightness of the virtual reality helmet is reduced when the polarizer is used. In addition, if a direction of the polarizer is inconsistent with the polarization direction of the light on the screen, display brightness is further reduced. Therefore, this solution has a high requirement for assembly precision.

### SUMMARY

To resolve the foregoing technical problem, this application provides a control method for a wearable device and an electronic device. In the method, the electronic device can adjust a diopter of an optical lens group, to increase a size of a light spot that is formed by focusing ambient light on a screen of the wearable device through a lens. This disperses energy of the light, and prevents the screen from being sunburned.

According to a first aspect, an embodiment of this application provides a control method for a wearable device. The method includes: obtaining a wearing status of a wearable device; and adjusting a first diopter of an optical lens group of the wearable device to a second diopter when the wearable device changes from a worn state to an unworn state, where the second diopter is greater than the first diopter.

An electronic device can detect the wearing status of the wearable device, and increase a diopter of the optical lens group of the wearable device when detecting that the wearable device is in the unworn state, to increase a size of a light spot that is formed by focusing ambient light on a screen of the wearable device through a lens. This disperses energy of the light, and prevents the screen from being sunburned.

For example, the electronic device may be a wearable device or a chip in the wearable device. Alternatively, the electronic device may be an external device, for example, devices such as a computer or a mobile phone connected to the wearable device, or a chip of the device.

For example, in embodiments of this application, a sunscreen mode in embodiments of this application can be implemented without changing a structure of an existing wearable device.

For example, the wearing status is automatically detected, and the diopter is correspondingly adjusted, to implement an automatic sunscreen function.

For example, the optical lens group may include one or more lenses. Optionally, the lens is an optical lens like a spherical lens, an aspheric lens, or a Fresnel lens.

For example, the lens may be made of plastic or glass. This is not limited in this application.

According to the first aspect, the method further includes: obtaining the wearing status of the wearable device; and adjusting the second diopter of the optical lens group of the wearable device to the first diopter when the wearable device changes from the unworn state to the worn state.

The electronic device can detect the wearing status of the wearable device, and when the wearable device is restored to the worn state from the unworn state, the wearable device can automatically restore the diopter of the optical lens group to a value obtained before the change. In this way, when a user re-wears the wearable device, the sunscreen mode can be automatically disabled, so that the user can watch a clear picture displayed on the screen.

For example, the first diopter may be set by the user in a use process, or may be set on the wearable device before delivery.

According to any one of the first aspect or the implementations of the first aspect, the second diopter is a maximum diopter that can be reached by the optical lens group.

The electronic device can adjust the diopter of the wearable device to the maximum, so that light is dispersed on the screen to a maximum extent, to prevent the screen from being sunburned.

According to any one of the first aspect or the implementations of the first aspect, the adjusting a first diopter of an optical lens group of the wearable device to a second diopter when the wearable device changes from a worn state to an unworn state includes: obtaining a first state of a focus adjustment module of the wearable device when the wearable device changes from the worn state to the unworn state, where the focus adjustment module is configured to control the first diopter of the optical lens group, and a diopter of the optical lens group is the first diopter when the focus adjustment module is set to the first state; and adjusting the focus adjustment module to a second state, where a diopter of the optical lens group is the second diopter when the focus adjustment module is set to the second state.

In this way, the electronic device can control the focus adjustment module to adjust the diopter of the optical lens group.

For example, the first state of the focus adjustment module is a current state described in the following embodiments. The second state of the focus adjustment module is a state of the maximum diopter described in the following embodiments.

According to any one of the first aspect or the implementations of the first aspect, the adjusting a first diopter of an optical lens group of the wearable device to a second diopter when the wearable device changes from a worn state to an unworn state includes: adjusting the first diopter of the optical lens group of the wearable device to the second diopter when the wearable device changes from the worn state to the unworn state and remains in the unworn state within specified duration.

In this way, the electronic device enables the subsequent sunscreen mode only when determining, within the specified duration, that the wearable device remains in the unworn state, to avoid frequent enabling and disabling of the sunscreen mode, thereby reducing power consumption of the device.

According to a second aspect, an embodiment of this application provides an electronic device. The device includes one or more processors, a memory, and one or more computer programs, where the one or more computer programs are stored on the memory, and when the computer programs are executed by the one or more processors, the electronic device is enabled to perform the following steps: obtaining a wearing status of a wearable device; and adjusting a first diopter of an optical lens group of the wearable device to a second diopter when the wearable device changes from a worn state to an unworn state, where the second diopter is greater than the first diopter.

According to the second aspect, when the computer programs are executed by the one or more processors, the electronic device is enabled to perform the following steps: obtaining the wearing status of the wearable device; and adjusting the second diopter of the optical lens group of the wearable device to the first diopter when the wearable device changes from the unworn state to the worn state.

According to any one of the second aspect or the implementations of the second aspect, the second diopter is a maximum diopter that can be reached by the optical lens group.

According to any one of the second aspect or the implementations of the second aspect, when the computer programs are executed by the one or more processors, the electronic device is enabled to perform the following steps: obtaining a first state of a focus adjustment module of the wearable device when the wearable device changes from the worn state to the unworn state, where the focus adjustment module is configured to control the first diopter of the optical lens group, and a diopter of the optical lens group is the first diopter when the focus adjustment module is set to the first state; and adjusting the focus adjustment module to a second state, where a diopter of the optical lens group is the second diopter when the focus adjustment module is set to the second state.

According to any one of the second aspect or the implementations of the second aspect, when the computer programs are executed by the one or more processors, the electronic device performs the following steps: adjusting the first diopter of the optical lens group of the wearable device to the second diopter when the wearable device changes from the worn state to the unworn state and remains in the unworn state within specified duration.

Any one of the second aspect or the implementations of the second aspect corresponds to any one of the first aspect or the implementations of the first aspect. For technical effect corresponding to any one of the second aspect or the implementations of the second aspect, refer to the technical effect corresponding to any one of the first aspect or the implementations of the first aspect. Details are not described herein again.

According to a third aspect, an embodiment of this application provides a computer-readable medium, configured to store a computer program. The computer program includes instructions used to perform the method according to any one of the first aspect or the possible implementations of the first aspect.

According to a fourth aspect, an embodiment of this application provides a computer program. The computer program includes instructions used to perform the method according to any one of the first aspect or the possible implementations of the first aspect.

According to a fifth aspect, an embodiment of this application provides a chip. The chip includes a processing circuit and a transceiver pin. The transceiver pin and the processing circuit communicate with each other through an internal connection path. The processing circuit performs the method according to any one of the first aspect or the possible implementations of the first aspect, to control a receive pin to receive a signal and a transmit pin to send a signal.

According to a sixth aspect, an embodiment of this application provides a control system for a wearable device. The system includes the electronic device according to the second aspect and a wearable device.

### BRIEF DESCRIPTION OF DRAWINGS

To describe technical solutions in embodiments of this application more clearly, the following briefly describes accompanying drawings for describing embodiments of this application. It is clear that the accompanying drawings in the following descriptions show merely some embodiments of this application, and a person of ordinary skill in the art may still derive other drawings from these accompanying drawings without creative efforts.
FIG. 1 is a schematic diagram of an example structure of a wearable device;
FIG. 2 is a schematic diagram of an example structure of a wearable device;
FIG. 3 is a schematic diagram of an example hardware structure of an electronic device;
FIG. 4 is a schematic diagram of an example software structure of an electronic device;
FIG. 5 is a schematic flowchart of a control method for a wearable device according to an embodiment of this application;
FIG. 6 is a schematic diagram of an example structure of a wearable device;
FIG. 7 is a schematic diagram of an example position change of a focus adjustment module;
FIG. 8 is a schematic diagram of an example position change of a focus adjustment module; and
FIG. 9 is a schematic diagram of a structure of an apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not indicate a particular order of the objects. For example, a first target object and a second target object are used to distinguish between different target objects, but are not used to describe a particular order of the target objects.

In embodiments of this application, the word "example", "for example", or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

In descriptions of embodiments of this application, unless otherwise stated, "a plurality of" means two or more than two. For example, a plurality of processing units means two or more processing units; and a plurality of systems mean two or more systems.

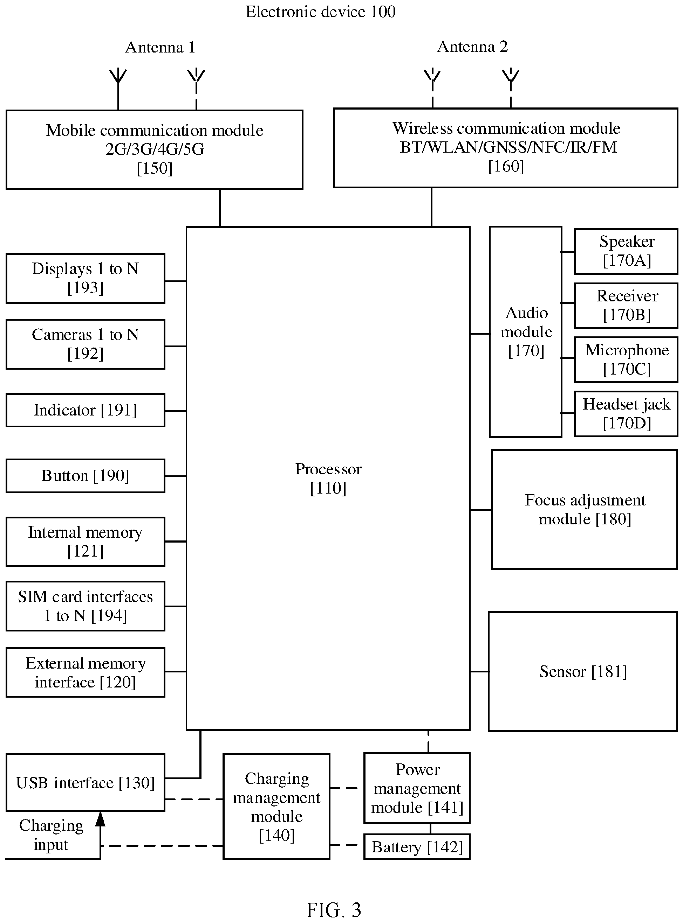

FIG. 3 is a schematic diagram of a structure of an electronic device 100. It should be understood that the electronic device 100 shown in FIG. 3 is merely an example of the electronic device, and the electronic device 100 may have more or fewer components than those shown in the figure, or may combine two or more components, or may have different component configurations. Various components shown in FIG. 3 may be implemented in hardware including one or more signal processing and/or application-specific integrated circuits, software, or a combination of hardware and software. It should be noted that the electronic device 100 shown in FIG. 3 may be VR glasses in FIG. 1, or may be a handle 1 and a handle 2 in FIG. 1. This is not limited in this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, an electromagnetic module 180, a 6-axis IMU module 181, a button 190, an indicator 191, a camera 192, a display 193, a subscriber identity module (subscriber identity module, SIM) card interface 194, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache. The memory may store instructions or data recently used or cyclically used by the processor 110. If the processor 110 needs to use the instructions or the data again, the processor may directly invoke the instructions or the data from the memory. This avoids repeated access, and reduces waiting time of the processor 110, to improve system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

Optionally, in this embodiment of this application, the processor 110, the external memory interface 120, and the internal memory 121 may also be disposed in an external device. For example, a wearable device may be connected to a device like a computer, a tablet computer, or a mobile phone through a connection cable. Correspondingly, the processor 110, the external memory interface 120, and the internal memory 121 each may be the processor and the memory in the external device. In other words, the processor in the external device may implement the steps performed by the processor in this embodiment of this application.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing an audio through the headset.

It may be understood that an interface connection relationship between modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device by using the power management module 141.

The power management module 141 is configured to connect the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further reused to improve antenna utilization. For example, the antenna 1 may be reused as a diversity antenna of a wireless local area network. In some other embodiments, an antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same component as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same component as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives the electromagnetic wave through the antenna 2, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 193 is configured to display an image, a video, and the like. The display 193 includes a display panel and an optical lens group. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 193, where N is a positive integer greater than 1.

Optionally, the optical lens group includes one or more optical lenses, such as a spherical lens, an aspheric lens, or a Fresnel lens.

The electronic device 100 may implement a photographing function by using the ISP, the camera 192, the video codec, the GPU, the display 194, the application processor, and the like.

The ISP is configured to process data fed back by the camera 192. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scene. In some embodiments, the ISP may be disposed in the camera 193.

The camera 192 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 192, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The external memory interface 120 may be used to connect to an external storage card, for example, a micro SD card, to extend a storage capability of the electronic device 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (for example, a sound playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement audio functions such as music playing and recording, through the audio module 170, the speaker 170A, the receiver 170B, the microphone 170C, the headset jack 170D, the application processor, and the like.

A focus adjustment module 180 may also be referred to as a focus adjustment module, and includes a motor (including a motor driver and a motor body), a gear, and an adjustment connecting rod. The adjustment connecting rod is connected to one or more lenses in the optical lens group. The processor controls the motor driver to output a digital control signal. The motor rotates after receiving the signal. The connecting rod drives the lens to move (adjust a spacing between the lenses) after the gear rotates, to adjust a diopter of the optical lens group. It should be noted that the diopter in this embodiment of this application is a magnitude of refraction generated in a propagation direction of light when the light is emitted from an object into another substance with different light density. For example, for a specific optical lens group, a spacing between one or more lenses can be controlled to adjust a diopter.

A sensor 181 optically includes but is not limited to an acceleration sensor, a distance sensor, an optical proximity sensor, an ambient light sensor, and the like. The optical proximity sensor may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor, that a user holds the electronic device 100 close to an ear for a call, so that automatic screen-off is implemented to save power. The optical proximity sensor may also be used in a leather case mode or a pocket mode to automatically perform screen unlocking or locking. In this embodiment of this application, the optical proximity sensor may be further configured to detect whether the user wears a wearable device, for example, a VR helmet.

The button 190 includes a power button, a volume button, and the like. The button 190 may be a mechanical button, or may be a touch button. The electronic device 100 may receive a button input, and generate a button signal input related to a user setting and function control of the electronic device 100.

The indicator 191 may be an indicator light, and may be configured to indicate a charging state and a power change, or may be configured to indicate a message, a missed call, a notification, and the like.

The SIM card interface 194 is configured to connect to a SIM card. The SIM card may be inserted into the SIM card interface 194 or removed from the SIM card interface 194, to implement contact with or separation from the electronic device 100. The electronic device 100 may support one or N SIM card interfaces, where N is a positive integer greater than 1.

A software system of the electronic device 100 may use a layered architecture, an event-driven architecture, a microkernel architecture, a micro service architecture, or a cloud architecture. In this embodiment of this application, an Android system with a layered architecture is used as an example to describe a software structure of the electronic device 100. In another embodiment, the electronic device 100 may alternatively use a Windows system or another system. This is not limited in this application.

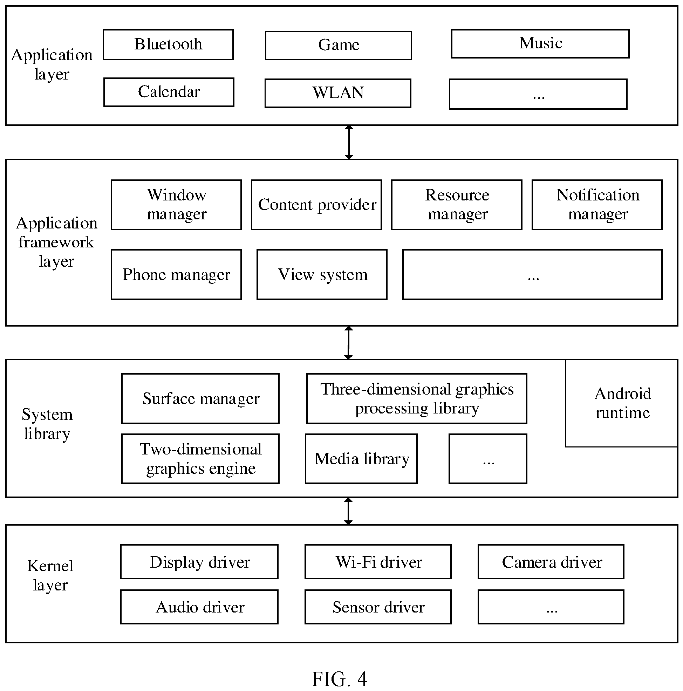

FIG. 4 is a block diagram of the software structure of the electronic device 100 according to this embodiment of this application.

In the layered architecture of the electronic device 100, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 4, the application package may include applications such as Bluetooth, Game, Music, Calendar, and WLAN.

The application framework layer provides an application programming interface (application programming interface, API) and a programming framework for an application at the application layer. The application framework layer includes some predefined functions.

As shown in FIG. 4, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history, a bookmark, an address book, and the like.

The view system includes visual controls such as a control for displaying a text and a control for displaying a picture. The view system may be configured to construct an application. A display interface may include one or more views. For example, a display interface including an SMS message notification icon may include a text display view and a picture display view.

The phone manager is configured to provide a communication function for the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The displayed notification information may automatically disappear after a short pause without a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be invoked in java language, and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files and the like. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, a Bluetooth driver, a Wi-Fi driver, and the like.

It may be understood that components or modules included in the application layer, the application framework layer, the system library and runtime layer, and the kernel layer shown in FIG. 4 do not constitute a specific limitation on the electronic device 100. In some other embodiments of this application, the electronic device 100 may include more or fewer components than those shown in the figure, combine some components, split some components, or have different component arrangements.

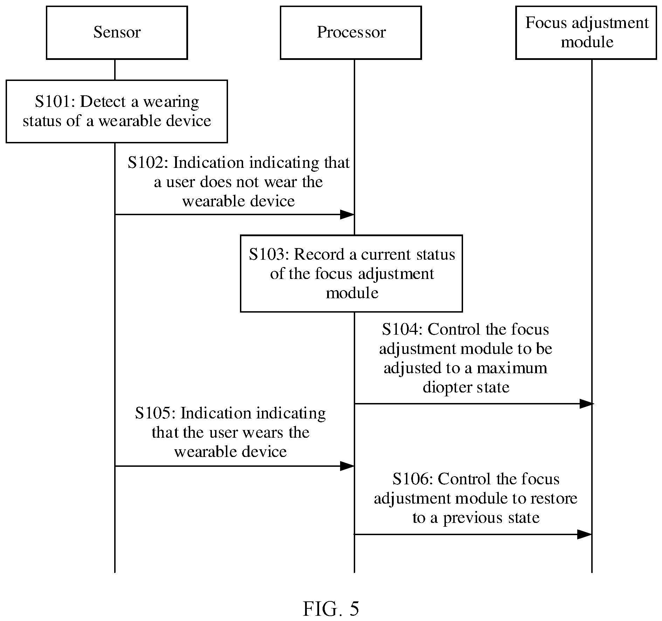

FIG. 5 is a schematic flowchart of a control method for a wearable device according to an embodiment of this application. Refer to FIG. 5. The method specifically includes the following steps.

S101: A sensor detects a wearing status of a wearable device.

For example, as described above, the wearable device may include the optical proximity sensor. The optical proximity sensor optionally includes a transmitting unit, a receiving unit, and a calculation unit. The transmitting unit is configured to transmit a detection signal (for example, a transmitting unit in an infrared light proximity sensor may transmit detection infrared light). The receiver unit is configured to receive a detection signal reflected by a target object. The calculation unit calculates a time difference between a moment at which the transmitting unit transmits a signal and a moment at which a receiver receives a signal, and calculates a distance between the sensor and the target object based on a propagation speed of the signal. Correspondingly, the optical proximity sensor may detect, according to the foregoing principle, whether a user wears the wearable device.

It should be noted that in this embodiment of this application, only the infrared light proximity sensor is used as an example for description. In another embodiment, this can also be implemented by using another sensor that can detect the wearing status of the wearable device, for example, an ultrasonic optical proximity sensor and a laser optical proximity sensor. This is not limited in this application.

For example, the optical proximity sensor optionally performs periodic detection, and determines, based on a detection signal received within a current period, that the user wears the wearable device. Optionally, the optical proximity sensor may also detect the wearing status in real time. In this application, only periodic detection is used as an example for description. In an example, after detecting that the user wears the wearable device, the optical proximity sensor may send, to a processor, an indication indicating that the user wears the wearable device, to indicate that the user wears the wearable device. In another example, after detecting that the user wears the wearable device, the optical proximity sensor may detect whether the wearable device in a worn state within a previous period. Optionally, if the wearable device is in the worn state within the previous period, the optical proximity sensor does not need to send any indication. If the wearable device is in an unworn state within the previous period, the optical proximity sensor sends, to a processor, an indication indicating that the user wears the wearable device. That is, only when the wearable device changes from the unworn state to the worn state, the optical proximity sensor may send, to the processor, indication information indicating that the user wears the wearable device. This reduces a quantity of interactions between the sensor and the processor.

For example, the optical proximity sensor determines, based on a detection signal received within a current period, that the user does not wear the wearable device. In an example, the optical proximity sensor may send, to the processor, indication information indicating that the user does not wear the wearable device, to indicate that the user does not wear the wearable device, that is, S 102 is performed. In another example, the optical proximity sensor may also detect whether the wearable device is in a worn state within a previous period. Optionally, if the wearable device is in an unworn state within the previous period, the optical proximity sensor does not need to send any indication. If the wearable device is in the worn state within the previous period, the optical proximity sensor may send, to a processor, an indication indicating that the user does not wear the wearable device. That is, only when the wearable device changes from the worn state to the unworn state, the optical proximity sensor may send, to the processor, indication information indicating that the user does not wear the wearable device. This can reduce a quantity of interactions between the sensor and the processor.

S102: The sensor sends, to the processor, the indication indicating that the user does not wear the wearable device.

For a specific description, refer to the foregoing description. Details are not described herein again.

S103: The processor records a current state of a focus adjustment module.

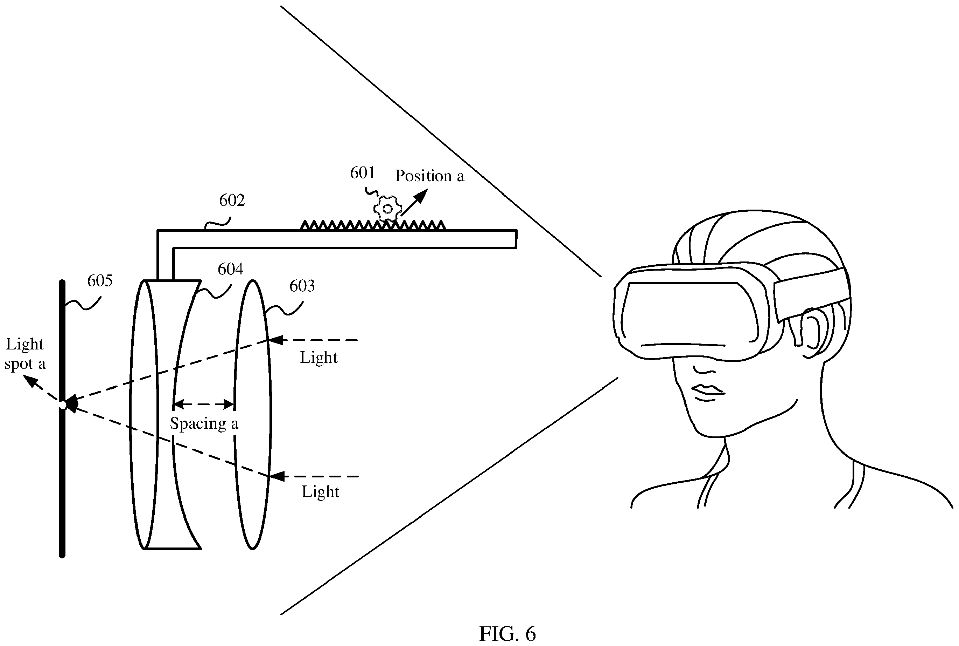

For example, FIG. 6 is a schematic diagram of an example structure of the wearable device. Refer to FIG. 6. As described above, the focus adjustment module optionally includes a motor (not shown in the figure), a gear 601, and an adjustment connecting rod 602.

The following briefly describes an adjustment principle of the focus adjustment module. The motor in this embodiment of this application is optionally a stepper motor or a servo motor. The motor controls the gear 601 to implement a specific angular displacement by receiving a digital control signal of a motor driver. The stepper motor is controlled based on a quantity of pulses and a frequency of the digital control signal, and the servo motor is controlled based on pulse duration of the digital control signal. In this embodiment of this application, when the processor records the current state of the focus adjustment module, for example, in FIG. 6, the gear 601 is currently located at a position a of the adjustment connecting rod 602. In this embodiment of this application, it may be considered that a position of the motor is a position of the gear 601. Certainly, the motor may alternatively be separated from the gear 601, that is, the motor and the gear 601 are located at different positions. This is not limited in this application. In this embodiment of this application, the processor only needs to record a digital control signal corresponding to the position of the motor. When restoration is required subsequently, the processor may control, based on the recorded control signal, the motor to restore the focus adjustment module to the current state.

For example, one end of the adjustment connecting rod 602 is connected to at least one optical lens in an optical lens group, for example, connected to an optical lens 604. The motor controls, based on a control signal output by the processor, the gear 601 to move on the adjustment connecting rod 602, so that the adjustment connecting rod 602 and the gear 601 can move relative to each other. The adjustment connecting rod 602 moves to drive the optical lens 604 to move, to adjust a spacing between the optical lens 604 and an optical lens 603 in a horizontal direction, and adjust a diopter of the optical lens group.

Still refer to FIG. 6. For example, the user currently wears the wearable device (for example, a VR helmet or VR glasses). Correspondingly, the optical proximity sensor may detect that the user wears the wearable device, and send, to the processor, the indication indicating that the user wears the wearable device. The processor records a current position of the motor in response to the received indication indicating that the user wears the wearable device. As shown in FIG. 6, it is assumed that the position of the motor is a position corresponding to the gear 601, and the gear 601 is located at the position a of the adjustment connecting rod 602. Correspondingly, the spacing between the optical lens 604 and the optical lens 603 is a spacing a. In a current state, light is focused on a screen 605 through the optical lens group, to form a light spot a. It should be noted that, in this embodiment of this application, the position of the motor (or the gear) recorded by the processor may also be understood as a relative position between the gear and the adjustment connecting rod. Usually, an absolute position of the gear is fixed, and sawtooth rotation of the gear can drive the relative position between the gear and the adjustment connecting rod to change.

S 104: The processor controls the focus adjustment module to be adjusted to a maximum diopter state.

For example, the processor may preconfigure the maximum diopter state. Optionally, the maximum diopter state may be understood as a corresponding state of the focus adjustment module obtained when the diopter of the optical lens group is a maximum value that can be reached. It may be understood that the processor is preconfigured with a specified position. When the gear rotates, and the gear is disposed at a specified position on the adjustment connecting rod, the diopter of the optical lens group is the maximum value. In this case, the state of the focus adjustment module is the maximum diopter state.

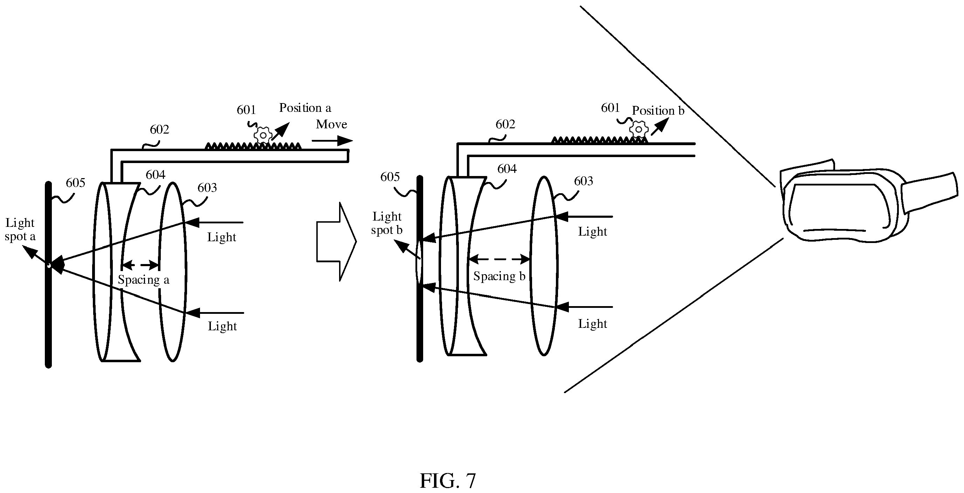

For example, FIG. 7 is a schematic diagram of an example position change of the focus adjustment module. Refer to FIG. 7. For example, the processor may obtain the current state of the focus adjustment module, to be specific, the gear 601 is at the position a of the adjustment connecting rod 602. The processor may further obtain the preconfigured specified position, for example, a position b shown in FIG. 7, that is, the processor is preconfigured with the specified position, namely, the position b, and expects to change the relative position between the gear 601 and the adjustment connecting rod 602 through rotation of the gear 601, so that the gear 601 is located at the position b of the adjustment connecting rod 602. The processor may obtain a displacement between the two positions a and b based on the current state of the adjustment module and the preconfigured specified position. The processor may control, based on the control signal, the gear 601 to rotate, so that the adjustment connecting rod moves horizontally, to change the relative position between the gear 601 and the adjustment connecting rod until the position b is reached. The processor may record a displacement of the change and a quantity of corresponding pulse signals for subsequent restoration.

Still refer to FIG. 7. For example, the adjustment connecting rod 602 move horizontally, so that the optical lens 604 connected to the adjustment connecting rod 602 also moves horizontally. Because a position of the optical lens 603 remains unchanged, the spacing between the optical lens 604 and the optical lens 603 is increased. When the gear 601 is located at the position b of the adjustment connecting rod 602, the spacing between the optical lens 604 and the optical lens 603 is a spacing b. The spacing b is greater than the spacing a. In this case, the diopter of the optical lens group is increased. Correspondingly, ambient light is refracted to the screen 605 through the optical lens group. Because the diopter is increased, the ambient light forms a light spot b on the screen 605. The light spot b is greater than the light spot a. It may be understood that, in this embodiment of this application, the relative position between the optical lenses in the optical lens group is adjusted, to change the diopter of the optical lens group. After the diopter of the optical lens group is increased, the ambient light cannot be focused on the screen, to achieve a sunscreen effect.

It should be noted that, in this embodiment of this application, for example, the manner of adjusting the relative position between lenses in the optical lens group through the adjustment connecting rod shown in FIG. 7 is merely an example. In another embodiment, the relative position between the optical lenses in the optical lens group may alternatively be adjusted in another feasible manner, to increase the diopter of the optical lens group, so as to achieve a sunscreen obj ective.

It should be further noted that the specified position in this embodiment of this application is merely an example. Based on characteristics of different optical lens groups, different diopters of the optical lens groups may correspond to different relative positions. For example, in an optical lens group produced by a manufacturer A, when the gear 601 is located on a leftmost side of the adjustment connecting rod 602, a diopter of the optical lens group is maximum, to be specific, a position at which the gear 601 is located on the leftmost side of the adjustment connecting rod 602 is a preset specified position, and corresponds to a maximum diopter state of the focus adjustment module. In an optical lens group produced by a manufacturer B, when the gear 601 is located on a rightmost side of the adjustment connecting rod 602, a diopter of the optical lens group is maximum, to be specific, a position at which the gear 601 is located on the rightmost side of the adjustment connecting rod 602 is a preset specified position, and corresponds to a maximum diopter state of the focus adjustment module. Therefore, the specified position may be set based on an actual requirement. This is not limited in this application.

It should be further noted that in this embodiment of this application, only an example in which the diopter is adjusted to the maximum is used for description. In another embodiment, for example, when the gear 601 is located on the leftmost side of the adjustment connecting rod 602, the diopter of the optical lens group is maximum, and the focus adjustment module is in the maximum diopter state. However, when the gear 601 is close to a leftmost position on the adjustment connecting rod 602, the ambient light cannot be focused on the screen due to the diopter of the optical lens group. Correspondingly, to improve subsequent restoration efficiency, a position corresponding to a non-maximum diopter may also be used as a specified position. This is not limited in this application.

In a possible implementation, the processor starts a timer after receiving the indication indicating that the user does not wear the wearable device. Timing duration of the timer may be set based on an actual requirement, for example, may be 1 minute. This is not limited in this application. After timing of the timer ends, if the processor does not receive the indication indicating that the user wears the wearable device, the processor may determine that the device is turned off. The processor may perform S103 and a subsequent step. This can avoid frequent enabling and disabling of a sunscreen mode caused by the user turning on/off the device within a short time period.

In another possible implementation, after receiving the indication indicating that the user does not wear the wearable device, the processor may perform S103 and a subsequent step, that is, enable a sunscreen mode.

S105: The sensor sends, to the processor, the indication indicating that the user wears the wearable device.

For example, as described above, optionally, the sensor detects the wearing status of the wearable device in real time or periodically. That is, in a process of performing the foregoing steps, the sensor continuously detects the wearing status of the wearable device.

For example, in this embodiment of this application, after detecting that the user wears the wearable device, the sensor may send, to the processor, the indication indicating that the user wears the wearable device, to indicate that the user wears the wearable device. For a specific description, refer to related content in S101. Details are not described herein again.

S106: The processor controls the focus adjustment module to restore to a previous state.

For example, as described above, before the processor controls a status change of the focus adjustment module, a state (namely, the state recorded in S103) of the focus adjustment module before the change is recorded. The processor may restore, based on the maximum diopter state of the focus adjustment module and the state before the change, the focus adjustment module to the state before the change.

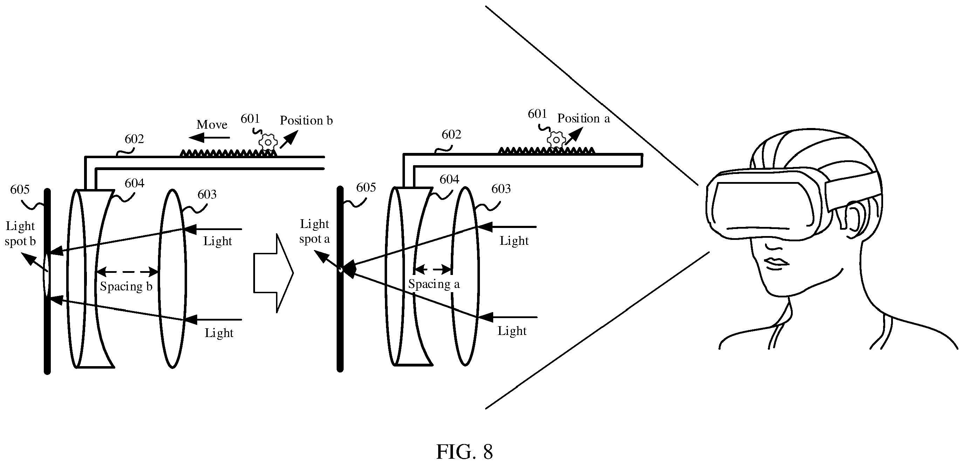

For example, FIG. 8 is a schematic diagram of an example position change of the focus adjustment module, to show a restoration process of the focus adjustment module. Refer to FIG. 8. For example, as described above, the processor records the quantity of corresponding pulse signals obtained when the gear 601 is moved from the position a of the adjustment connecting rod to the position b. Correspondingly, the processor may control, based on the recorded quantity of pulse signals, the motor to drive the gear 601 to rotate, so that the gear 601 restores from the position b of the adjustment connecting rod to the position a. Correspondingly, the optical lens 604 moves with the adjustment connecting rod, and the spacing between the optical lens 604 and the optical lens 603 is restored from the spacing b to the spacing a, to restore the diopter of the optical lens group. Therefore, the ambient light is focused on the screen 605 through the optical lens group, to form the light spot a.

Optionally, the wearable control method shown in FIG. 5 is implemented based on that the sensor in the wearable device detects the wearing status. In another embodiment, if the wearable device does not include the sensor that can detect the wearing status, for example, does not include the optical proximity sensor. In this scenario, a trigger condition of the sunscreen mode may be based on an on/off state of the wearable device. For example, a switch may be disposed on the wearable device, to turn on and turn off the wearable device. For example, when the processor detects that the switch of the wearable device is turned off, that is, the wearable device changes from an on state to an off state, the processor may perform S103 and S104, to be specific, record the current state of the focus adjustment module, and dispose the focus adjustment module at the specified position. For example, when the processor detects that the switch of the wearable device is turned on, that is, the wearable device changes from an off state to an on state, the processor may perform S106, to be specific, control the focus adjustment module to restore to a state before the turnoff. That is, in this embodiment of this application, enabling and disabling of the sunscreen mode may be triggered by detecting a turn-on operation and a turn-off operation of the user.

It may be understood that, to implement the foregoing functions, the electronic device includes corresponding hardware and/or software modules for performing the functions. With reference to algorithm steps of each example described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

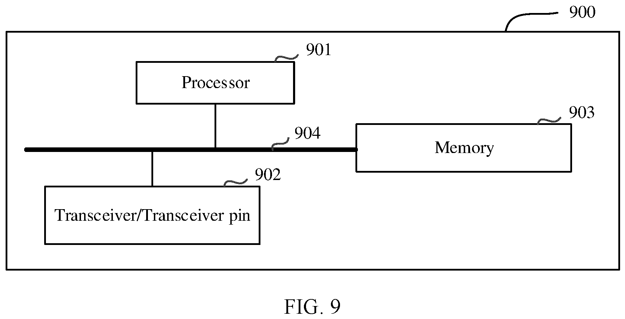

In an example, FIG. 9 is a schematic block diagram of an apparatus 900 according to an embodiment of this application. The apparatus 900 may include a processor 901 and a transceiver/transceiver pin 902, and optionally, further include a memory 903.

Components of the apparatus 900 are coupled together through a bus 904. In addition to a data bus, the bus 904 further includes a power bus, a control bus, and a status signal bus. However, for clarity of description, various types of buses in the figure are marked as the bus 904.

Optionally, the memory 903 may be used for instructions in the foregoing method embodiment. The processor 901 may be configured to: execute the instructions in the memory 903, control a receive pin to receive a signal, and control a transmit pin to send a signal.

The apparatus 900 may be the electronic device or a chip of the electronic device in the foregoing method embodiment.

All related content of the steps in the foregoing method embodiment may be cited in function descriptions of the corresponding functional modules. Details are not described herein again.

An embodiment further provides a computer storage medium. The computer storage medium stores computer instructions. When the computer instructions are run on an electronic device, the electronic device is enabled to perform the foregoing related method steps, to implement the method in the foregoing embodiments.

An embodiment further provides a computer program product. When the computer program product runs on a computer, the computer is enabled to perform the foregoing related steps, to implement the method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the method in the foregoing method embodiment.

The electronic device, the computer storage medium, the computer program product, or the chip provided in embodiments is configured to perform the corresponding method provided above. Therefore, for beneficial effect that can be achieved, refer to the beneficial effect of the corresponding method provided above. Details are not described herein again.

Based on descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on a requirement. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into modules or units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may be one or more physical units, may be located in one place, or may be distributed on different places. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

Any content of embodiments of this application and any content of a same embodiment may be freely combined. Any combination of the foregoing content shall fall within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are only illustrative and not restrictive. Inspired by this application, a person of ordinary skill in the art may further make many modifications without departing from the purposes of this application and the protection scope of the claims, and all the modifications shall fall within the protection scope of this application.

Methods or algorithm steps described in combination with the content disclosed in embodiments of this application may be implemented by hardware, or may be implemented by a processor by executing software instructions. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk drive, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in the computer-readable medium. The computer-readable medium includes a computer storage medium and a communication medium. The communication medium includes any medium that enables a computer program to be transmitted from one place to another. The storage medium may be any available medium accessible to a general-purpose or dedicated computer.

The foregoing describes embodiments of this application with reference to the accompanying drawings. However, this application is not limited to the foregoing specific implementations. The foregoing specific implementations are only illustrative and not restrictive. Inspired by this application, a person of ordinary skill in the art may further make many modifications without departing from the purposes of this application and the protection scope of the claims, and all the modifications shall fall within the protection scope of this application.

## Claims

1. A control method for a wearable device, comprising:
obtaining a wearing status of a wearable device; and
adjusting a first diopter of an optical lens group of the wearable device to a second diopter when the wearable device changes from a worn state to an unworn state, wherein the second diopter is greater than the first diopter.

2. The method according to claim 1, wherein the method further comprises:
obtaining the wearing status of the wearable device; and
adjusting the second diopter of the optical lens group of the wearable device to the first diopter when the wearable device changes from the unworn state to the worn state.

3. The method according to claim 1, wherein the second diopter is a maximum diopter that can be reached by the optical lens group.

4. The method according to claim 1, wherein the adjusting a first diopter of an optical lens group of the wearable device to a second diopter when the wearable device changes from a worn state to an unworn state comprises:
obtaining a first state of a focus adjustment module of the wearable device when the wearable device changes from the worn state to the unworn state, wherein the focus adjustment module is configured to control the first diopter of the optical lens group, and a diopter of the optical lens group is the first diopter when the focus adjustment module is set to the first state; and
adjusting the focus adjustment module to a second state, wherein a diopter of the optical lens group is the second diopter when the focus adjustment module is set to the second state.

5. The method according to claim 1, wherein the adjusting a first diopter of an optical lens group of the wearable device to a second diopter when the wearable device changes from a worn state to an unworn state comprises:
adjusting the first diopter of the optical lens group of the wearable device to the second diopter when the wearable device changes from the worn state to the unworn state and remains in the unworn state within specified duration.

6. An electronic device, comprising:
one or more processors;
a memory; and
one or more computer programs, wherein the one or more computer programs are stored on the memory, and when the computer programs are executed by the one or more processors, the electronic device is enabled to perform the following steps:
obtaining a wearing status of a wearable device; and
adjusting a first diopter of an optical lens group of the wearable device to a second diopter when the wearable device changes from a worn state to an unworn state, wherein the second diopter is greater than the first diopter.

7. The device according to claim 6, wherein when the computer programs are executed by the one or more processors, the electronic device is enabled to perform the following steps:
obtaining the wearing status of the wearable device; and
adjusting the second diopter of the optical lens group of the wearable device to the first diopter when the wearable device changes from the unworn state to the worn state.

8. The device according to claim 6, wherein the second diopter is a maximum diopter that can be reached by the optical lens group.

9. The device according to claim 6, wherein when the computer programs are executed by the one or more processors, the electronic device is enabled to perform the following steps:
obtaining a first state of a focus adjustment module of the wearable device when the wearable device changes from the worn state to the unworn state, wherein the focus adjustment module is configured to control the first diopter of the optical lens group, and a diopter of the optical lens group is the first diopter when the focus adjustment module is set to the first state; and
adjusting the focus adjustment module to a second state, wherein a diopter of the optical lens group is the second diopter when the focus adjustment module is set to the second state.

10. The device according to claim 6, wherein when the computer programs are executed by the one or more processors, the electronic device is enabled to perform the following step:
adjusting the first diopter of the optical lens group of the wearable device to the second diopter when the wearable device changes from the worn state to the unworn state and remains in the unworn state within specified duration.

11. A computer-readable storage medium, comprising a computer program, wherein when the computer program is executed on a computer, the computer is enabled to perform the method according to any one of claims 1 to 5.

12. A chip, comprising one or more interface circuits and one or more processors, wherein the interface circuit is configured to: receive a signal from a memory of an electronic device, and send the signal to the processor; the signal comprises computer instructions stored in the memory; and when the processor executes the computer instructions, the electronic device is enabled to perform the method according to any one of claims 1 to 5.
